# EUROPEAN PATENT SPECIFICATION

(11) **EP 4 313 469 B1**
(45) Date of publication and mention of the grant of the patent: **05.11.2025**
(21) Application number: 21727779.7
(22) Date of filing: 30.03.2021
(51) Int. Cl.: B23K 26/0622, B23K 26/18, B23K 26/352, B23K 101/34

(54) **METHOD OF MARKING METAL OBJECTS USING LASER ABLATION AND A METAL OBJECT WITH SUCH MARKINGS**
VERFAHREN ZUR MARKIERUNG VON METALLOBJEKTEN MITTELS LASERABLATION UND METALLOBJEKT MIT SOLCHEN MARKIERUNGEN
PROCÉDÉ DE MARQUAGE D'OBJETS MÉTALLIQUES PAR ABLATION LASER ET OBJET MÉTALLIQUE COMPORTANT DE TELS MARQUAGES

(43) Date of publication of application: 07.02.2024
(73) Proprietor: Hofmeister S.R.O., 32600 Plzen (CZ); Ceské vysoké ucení technické v Praze, 16000 Praha 6 (CZ)
(72) Inventor: KOZMIN, Pavel, 39701 Pisek (CZ); CERMAK, Adam, 30100 Plzen (CZ); SORM, Martin, 32600 Plzen (CZ); SYROVATKA, Jiri, 31200 Plzen (CZ); POLCAR, Tomas, 19000 Praha 9 (CZ); DANEK, Martin, 18100 Praha 8 (CZ)
(74) Representative: Zmeskal, Lukas
(86) International application number: PCT/CZ2021/050038
(87) International publication number: WO 2022/207019

(56) References cited:
- US-A1- 2014 083 984
- GAKOVIC B ET AL: "Femtosecond laser modification of multilayered TiAlN/TiN coating", SURFACE AND COATINGS TECHNOLOGY, ELSEVIER, NL, vol. 206, no. 2, 15 July 2011 (2011-07-15), pages 411 - 416, XP028283865, ISSN: 0257-8972, [retrieved on 20110730], DOI: 10.1016/J.SURFCOAT.2011.07.042

## Description

### Technical field

This invention relates to processing metal objects using ultrashort-pulse laser, specifically to creating surface structures on materials.

### Background Art

Document no. US2014083984 discloses producing a laser-induced periodic surface structure (LIPSS) using picosecond laser pulses emitted by an ultrashort-pulse laser system. LIPSS is a structure consisting of surface relief which causes diffraction of white light. The surface structure comprises highly-periodic (but imperfect) ripples which are formed by means of many laser pulses, typically hundreds or thousands pulses per spot. A beam of laser pulses with a time duration of Tp = <150fs-14ps> with a spot size of <5-70µm> can create at least one area patterned with LIPSS.

Document no. US2014083984 provides general guidance on said laser processing of material surfaces. However, it does not deal with the substrate material. Therefore, the optical properties of the LIPSS produced are less distinctive (namely the extent of light diffraction and the resulting colours of the diffracted light). Said document proposes the use of various types of laser pulses for more varied colourisation of the LIPSS.

Document GAKOVIC B ET AL: "Femtosecond laser modification of multilayered TiAlN/TiN coating", SURFACE AND COATINGS TECHNOLOGY, ELSEVIER, NL, vol. 206, no. 2, 15 July 2011, pages 411-416, XP028283865, ISSN: 0257-8972, DOI: 10.1016/J.SURFCOAT. 2011.07.042 describes a method of marking metal objects using laser ablation involving removal of material from a metal object by an ultrashort-pulse laser system. A beam of picosecond or femtosecond laser pulses is directed onto the metal object and the ultrashort-pulse laser system creates at least one area with the LIPSS in the metal object.

The purpose of the present invention is to provide a method of producing LIPSS which delivers improved optical properties and colourisation of the LIPSS even when processed with the laser disclosed in US2014083984.

### Disclosure of Invention

This invention relates to a method of marking metal objects by means of laser ablation as claimed in claim 1, to the metal object produced by the method as claimed in claim 8, and to a method for identifying registered items using a marking produced by the method of claim 1 as claimed in claim 14. The method involves removing material from a metal object by means of an ultrashort-pulse laser system. An ultrashort-pulse laser system is a complex device which can act on an object in a defined manner through a beam of picosecond or femtosecond laser pulses. Basic elements of an ultrashort-pulse laser system include a laser pulse source, optical devices and a workpiece positioning device. Ultrashort-pulse laser systems of this kind are included in background art. The material from the metal object is removed by directing a beam of picosecond or femtosecond laser pulses onto the metal object. The time duration of the laser pulses is Tp = <150fs-14ps> at a spot size of <5-70µm> and the laser pulse fluence is F = <0.8-20>×F_th; where F_th = <0.03-0.5> J/cm^2.

In one of preceding steps, the surface of the metal object is coated with a multilayer film. The multilayer film comprises at least a bottom layer and a top layer. The top layer has a higher laser beam absorbance than the bottom layer. It is therefore removed by the ultrashort-pulse laser system relatively more easily than the bottom layer. This also contributes to accurate production of LIPSS because the bottom layer is not easily removed accidentally. This fact also indicates that optical reflectance of the bottom layer is greater than that of the top layer. Consequently, light diffraction on the LIPSS becomes more pronounced. Higher reflectance may also help prevent accidental removal of the bottom layer during the removal of the top layer. Laser beam absorbance is determined using a test pass conducted with the ultrashort-pulse laser system according to background art. An ultrashort-pulse laser system acts on various materials, where the largest removal of matter occurs in the material which has the highest laser beam absorbance at the particular laser system set-up.

Using the above-defined ultrashort-pulse laser system, at least one area patterned with LIPSS is created on a metal object coated with the above-described multilayer film. It is accomplished by removing the top layer from a certain delimited location (area) on the surface of the object by means of the ultrashort-pulse laser system. At the same time, LIPSS is produced on the surface of the bottom layer within the delimited location (area).

Depending on the desired optical effect, LIPSS can be created with a linearly or circularly-polarized laser beam. The LIPSS produced with a linearly-polarized laser beam comprises an array of essentially parallel valleys separated by ridges. Circularly-polarized laser beam produces a disordered LIPSS consisting of valleys and ridges with non-uniform orientation and shapes. Differences in the shapes of the LIPSS lead to different light refraction and diffraction. LIPSS produced with circularly-polarized laser beam exhibits changing colours when observed essentially perpendicularly to the surface. LIPSS produced with linearly-polarized laser beam, when viewed at an acute angle, begin to appear more distinctive.

Consequently, at least two areas patterned with LIPSS can be created where the structure and/or relative orientation of the LIPSS differs between at least two areas. This means that the first area may comprise LIPSS created with a linearly-polarized laser beam and the second area may comprise LIPSS created with a circularly-polarized laser beam, which produced different structures in these areas. Furthermore, both areas patterned with LIPSS can be produced with a linearly-polarized laser beam. In such configuration, the LIPSS are rotated with respect to each other and possess different orientations. In such configuration, valleys and ridges are essentially parallel within each area but concurrent (non-parallel) between different areas. As a result, differences in light diffraction and different colourisation are observed among individual areas patterned with LIPSS viewed at different horizontal and/or vertical viewing angles.

In order to obtain broader visual variety among individual areas, the ultrashort-pulse laser system can be used for marking only the contour of least one area. Within said area, the top layer remains intact. This area only differs from the surrounding surface in its contour. The surface (top layer) within this area is at the same level as the top layer around this area. The creation of the contour may involve complete removal of the top layer, rendering the contour on the bottom layer surface. Alternatively, the top layer may be modified by the ultrashort-pulse laser system without being removed completely. This means that in the contour, the top layer is only partially removed (the bottom layer is only visible in a part of the contour or is not visible at all) or is not removed at all and, instead, its material is modified (e.g. partially melted) in a visible manner.

To make the LIPSS colourisation more distinctive, it is advantageous to create the bottom layer by sequential deposition of individual layers in the following order: Cr, followed by CrN and CrWC. Further, it is advantageous to build the top layer by depositing a DLC-category a-C:H layer (undoped DLC) or a-C:H:Me. Me is any metal atom. The metal atom may be W. Both bottom and top layers may preferably have a thickness of 1.5 µm, with a maximum deviation of 50 %. At this layer thickness, the amount of material is sufficient for processing with an ultrashort-pulse laser system according to the above-described process. At the same time, this layer is durable and easy to manufacture.

The surface of the metal object with the above-described marking is coated with a multilayer film. The multilayer film comprises at least a bottom layer and a top layer. The top layer has higher absorption of the laser beam than the bottom layer. The optical reflectance of the bottom layer is greater than that of the top layer. In the multilayer film, there is at least one area where there is no top layer and the surface of the bottom layer is patterned with LIPSS.

The multilayer film may comprise at least two areas patterned with LIPSS where the structure and/or relative orientation of the LIPSS differs between at least two areas. The multilayer film may also comprise at least one area with the top layer intact and with a contour.

The bottom portion of the bottom layer is preferably formed from Cr. The overlaying middle portion of the bottom layer is formed from CrN and the top portion of the bottom layer is formed from CrWC. Preferably, the top layer is a DLC-category a-C:H layer or a-C:H:Me. Preferably, the bottom and/or top layer thickness is 1.5 µm, with a deviation of no more than 50 %.

Another aspect of the invention is a method of identifying registered items by using a marking produced by the method according to claim 1. A registered item is understood to refer to an object which is provided with an identification feature by its manufacturer or user in order to facilitate record keeping and/or authentication (distinguishing from counterfeit objects). The product itself may be a metal object coated with a multilayer film which is provided with least one area patterned with LIPSS. Alternatively, a metal object in the form of a label with a multilayer film and at least one area patterned with LIPSS can be used and attached to a registered object.

The above-described marking can replace or complement existing optical marking methods, such as barcodes, QR codes, holographic stickers and others. Marking according to this invention is advantageous due to precise processing by means of sophisticated equipment which makes counterfeiting difficult. The marking may involve not only varied distribution of areas but also their different colourisation resulting from light diffraction caused by the different structures and/or relative orientations of LIPSS among individual areas. Up to 3 types of areas can be created. Areas patterned with LIPSS created with a linearly-polarized laser beam may have different angular displacements with respect to one another. As a result, they can be distinguished because different angular displacements cause them to appear in different colours. When observed from a single point, the light reflected from areas patterned with LIPSS created in different manners has different colours. Alternatively, the light reflected from areas patterned with LIPSS created in different manners has the same desired colour when observed from different angles pre-defined with respect to the light source, viewing points and the configuration of the areas patterned with LIPSS. By defining these parameters, a higher level of protection or a greater variety of coding can be achieved. The observer may be a camera system or a human eye.

The areas may have essentially any shape. Other aspects by which the areas can be distinguished may be considered, such as different shapes (e.g. circular or polygonal) or relative angular displacement of non-rotary-shaped areas (regardless of the structure or relative orientations of the LIPSS in them).

### Brief Description of Drawings

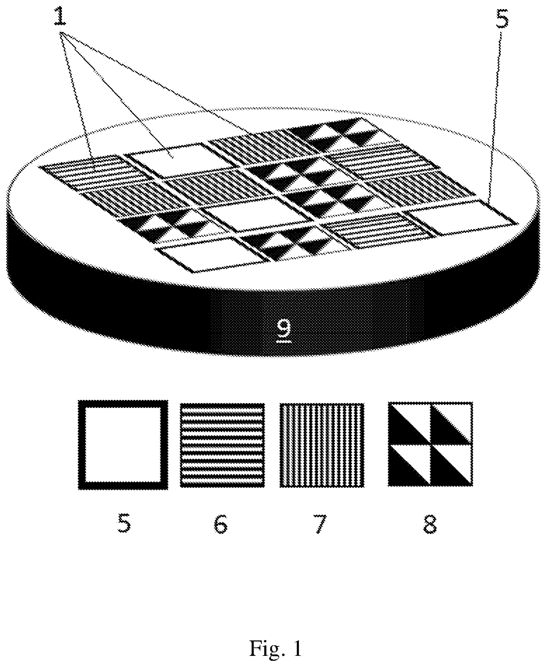

An exemplary embodiment of the proposed invention is described with reference to drawings, where Fig. 1 - an axonometric view of an object marked according to the present invention and a graphic legend showing an area with a contour and an intact top layer, an area patterned with LIPSS with a relative orientation of 0°, an area patterned with LIPSS with a relative orientation of 90° and an area patterned with a circular LIPSS;

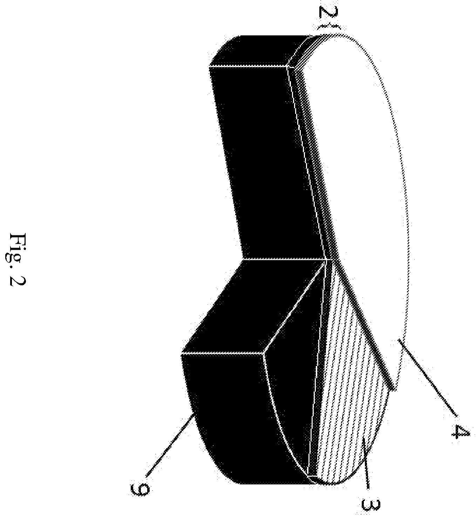

Fig. 2 - a section through a metal object coated with a multilayer depicted with bottom and top layers partially removed.

### Exemplary Embodiment of the Invention

The method according to the invention was used for marking a metal object 9. First, the surface of the metal object 9 was coated with a multilayer film 2. The multilayer film 2 comprises a bottom layer 3 and a top layer 4. The top layer 4 has higher laser beam absorbance than the bottom layer 3. The bottom layer 3 has a higher optical reflectance than the top layer 4.

The bottom layer 3 was created by sequential deposition of individual layers in the following order: Cr, followed by CrN and CrWC. The top layer 4 was then created by depositing a DLC-category a-C:H:Me layer, specifically a-C:H:W. Each of the bottom layer 3 and the top layer 4 had a thickness of 1.5 µm.

A beam of femtosecond laser pulses from an ultrashort-pulse laser system was directed at a metal object 9. The time duration of the laser pulses was Tp = 240fs at a spot size of 16µm and the laser pulse fluence was F = 6.25×F_th; where F_th = 0.08 J/cm^2. Using an ultrashort-pulse laser system, a matrix of sixteen areas 1 was created in the multilayer film 2 on the metal object 9. A total of twelve areas 1 contained the LIPSS. The areas 1 patterned with LIPSS were created by an ultrashort-pulse laser system in a manner where the top layer 4 was removed by laser pulses and, at the same time, the LIPSS was created on the surface of the bottom layer 3. At total of five areas 1 were patterned with LIPSS 8 using a circularly-polarized laser beam and seven areas 1 were patterned with LIPSS using a linearly-polarized laser beam. Out of these seven areas 1 three areas 1 were created with LIPSS 6 with a relative orientation of 0° and four areas 1 were created with LIPSS 7 with a relative orientation of 90°. By this means, different structures and relative orientations of the LIPSS among the three groups of areas 1 were produced. Furthermore, a group of four areas 1 were created with contours 5 and intact top layer 4.

An exemplary embodiment is clear from Fig. 1 and Fig. 2.

### List of reference symbols

1 - area
2 - multilayer film
3 - bottom layer
4 - top layer
5 - contour
6 - LIPSS with 0° orientation
7 - LIPSS with 90° orientation
8 - circular LIPSS
9 - metal object

## Claims

1. A method of marking metal objects using laser ablation involving removal of material from a metal object (9) by an ultrashort-pulse laser system in a manner where a beam of picosecond or femtosecond laser pulses is directed onto the metal object (9),
where the time duration (Tp) of the laser pulses is Tp = <150fs-14ps> at a spot size of <5-70µm> and the fluence of the laser pulses is F = <0.8-20>×F_th; where F_th = <0.03-0.5> J/cm^2 and the ultrashort-pulse laser system creates at least one area (1) with a LIPSS on the metal object (9),
wherein the surface of the metal object (9) is first coated with a multilayer film (2) which comprises at least a bottom layer (3) and a top layer (4), where the top layer (4) has a higher laser beam absorbance than the bottom layer (3) and thereby removing the top layer relatively more easily than the bottom layer and preventing the bottom layer to be easily removed accidentally, **characterized in that**
the laser pulses are used for removing the top layer (4) and, at the same time, patterning the surface of the bottom layer (3) with the LIPSS.

2. The method according to claim 1 **characterized in that** the LIPSS is created by a linearly-polarized or circularly-polarized laser beam.

3. The method according to claim 1 or 2 **characterized in that** at least two areas (1) with the LIPSS are created where the structure and/or relative orientation of the LIPSS differs between at least two areas (1).

4. The method according to any of the preceding claims **characterized in that** the ultrashort-pulse laser system is used for creating a contour (5) along at least one area (1) with intact top layer (4).

5. The method according to any of the preceding claims **characterized in that** the bottom layer (3) is created by sequential deposition of individual layers in the following order: Cr, followed by CrN and CrWC.

6. The method according to any of the preceding claims **characterized in that** the top layer (4) is created by depositing a DLC-category a-C:H or a-C:H:Me layer where Me is any metal atom.

7. The method according to claim 5 or 6 **characterized in that** the bottom layer (3) and/or the top layer (4) are built to have a mean thickness of 1.5 µm, with a deviation of no more than 50%.

8. The metal object provided with the marking produced according to any of the preceding claims wherein its surface is coated with a multilayer film (2) which comprises at least a bottom layer (3) and a top layer (4), where the top layer (4) has a higher laser beam absorbance than the bottom layer (3) **characterized in that**
the multilayer film (2) comprises at least one area (1) where there is no top layer (4) and the surface of the bottom layer (3) is patterned with the LIPSS.

9. The metal object according to claim 8 **characterized in that** the multilayer film (2) comprises at least two areas (1) with the LIPSS, where the structure and/or relative orientation of the LIPSS differs between at least two areas (1).

10. The metal object according to claim 8 or 9 **characterized in that** the multilayer film (2) comprises at least one area (1) with intact top layer (4) and a contour (5).

11. The metal object according to any of claims 8 through 10 **characterized in that** that bottom portion of the bottom layer (3) is formed from Cr, the overlaying middle portion of the bottom layer (3) is formed from CrN and the overlaying top portion of the bottom layer (3) is formed from CrWC.

12. The metal object according to any of claims 8 through 11 **characterized in that** the top layer (4) is a DLC-category a-C:H or a-C:H:Me layer where Me is any metal atom.

13. The metal object according to claim 11 or 12 **characterized in that** the bottom layer (3) and/or the top layer (4) have a mean thickness of 1.5 µm, with a deviation of no more than 50%.

14. The method for identifying registered items by using a marking produced by the method according to any of claims 1 to 7.

## Patentansprüche

1. Verfahren zur Markierung von Metallobjekten durch Laserablation, welches die Entfernung von Material von einem Metallobjekt (9) mittels eines Ultrakurzpulslasersystems umfasst, wobei ein Strahl aus pikosekunden- oder femtosekunden-Laserimpulsen auf das Metallobjekt (9) gerichtet wird,
wobei die Zeitdauer (Tp) der Laserimpulse Tp = <150fs-14ps> bei einem Fleckdurchmesser von <5-70 µm> beträgt und die Fluenz der Laserimpulse F = <0,8-20>×F_th ist; wobei F_th = <0,03-0,5> J/cm² ist und das Ultrakurzpulslasersystem mindestens einen Bereich (1) mit einem LIPSS auf dem Metallobjekt (9) erzeugt,
wobei die Oberfläche des Metallobjekts (9) zuerst mit einem Mehrschichtfilm (2) beschichtet ist, der zumindest eine untere Schicht (3) und eine obere Schicht (4) umfasst, wobei die obere Schicht (4) eine höhere Laserstrahlabsorption aufweist als die untere Schicht (3) und dadurch relativ leichter entfernt werden kann als die untere Schicht und verhindert wird, dass die untere Schicht versehentlich leicht entfernt wird, **dadurch gekennzeichnet, dass**
die Laserimpulse zum Entfernen der oberen Schicht (4) und zugleich zur Strukturierung der Oberfläche der unteren Schicht (3) mit dem LIPSS verwendet werden.

2. Verfahren nach Anspruch 1, **dadurch gekennzeichnet, dass** der LIPSS durch einen linear polarisierten oder zirkular polarisierten Laserstrahl erzeugt wird.

3. Verfahren nach Anspruch 1 oder 2, **dadurch gekennzeichnet, dass** mindestens zwei Bereiche (1) mit dem LIPSS erzeugt werden, wobei die Struktur und/oder relative Orientierung des LIPSS zwischen mindestens zwei Bereichen (1) differiert.

4. Verfahren nach einem der vorangehenden Ansprüche, **dadurch gekennzeichnet, dass** das Ultrakurzpulslasersystem verwendet wird, um entlang mindestens eines Bereichs (1) mit intakter oberer Schicht (4) einen Kontur (5) zu erzeugen.

5. Verfahren nach einem der vorangehenden Ansprüche, **dadurch gekennzeichnet, dass** die untere Schicht (3) durch aufeinanderfolgende Abscheidung einzelner Schichten in folgender Reihenfolge gebildet wird: Cr, gefolgt von CrN und CrWC.

6. Verfahren nach einem der vorangehenden Ansprüche, **dadurch gekennzeichnet, dass** die obere Schicht (4) durch Abscheidung einer DLC-Kategorie a-C:H oder a-C:H:Me-Schicht gebildet wird, wobei Me ein beliebiges Metallatom ist.

7. Verfahren nach Anspruch 5 oder 6, **dadurch gekennzeichnet, dass** die untere Schicht (3) und/oder die obere Schicht (4) so ausgeführt sind, dass sie eine mittlere Dicke von 1,5 µm mit einer Abweichung von nicht mehr als 50 % aufweisen.

8. Metallobjekt, versehen mit der Markierung, hergestellt gemäß einem der vorangehenden Ansprüche, dessen Oberfläche mit einem Mehrschichtfilm (2) beschichtet ist, der zumindest eine untere Schicht (3) und eine obere Schicht (4) umfasst, wobei die obere Schicht (4) eine höhere Laserstrahlabsorption aufweist als die untere Schicht (3), **dadurch gekennzeichnet, dass**
der Mehrschichtfilm (2) zumindest einen Bereich (1) enthält, in dem keine obere Schicht (4) vorhanden ist, und die Oberfläche der unteren Schicht (3) mit dem LIPSS strukturiert ist.

9. Metallobjekt nach Anspruch 8, **dadurch gekennzeichnet, dass** der Mehrschichtfilm (2) zumindest zwei Bereiche (1) mit dem LIPSS aufweist, wobei die Struktur und/oder die relative Orientierung des LIPSS zwischen mindestens zwei Bereichen (1) differieren.

10. Metallobjekt nach Anspruch 8 oder 9, **dadurch gekennzeichnet, dass** der Mehrschichtfilm (2) zumindest einen Bereich (1) mit intakter oberer Schicht (4) und eine Kontur (5) enthält.

11. Metallobjekt nach einem der Ansprüche 8 bis 10, **dadurch gekennzeichnet, dass** der untere Teil der unteren Schicht (3) aus Cr gebildet ist, der überlagerte mittlere Teil der unteren Schicht (3) aus CrN gebildet ist und der überlagerte obere Teil der unteren Schicht (3) aus CrWC gebildet ist.

12. Metallobjekt nach einem der Ansprüche 8 bis 11, **dadurch gekennzeichnet, dass** die obere Schicht (4) eine DLC-Kategorie a-C:H oder a-C:H:Me-Schicht ist, wobei Me ein beliebiges Metallatom ist.

13. Metallobjekt nach Anspruch 11 oder 12, **dadurch gekennzeichnet, dass** die untere Schicht (3) und/oder die obere Schicht (4) eine mittlere Dicke von 1,5 µm mit einer Abweichung von nicht mehr als 50 % aufweisen.

14. Verfahren zur Identifizierung registrierter Gegenstände durch Verwendung einer Markierung, erzeugt durch das Verfahren gemäß einem der Ansprüche 1 bis 7.

## Revendications

1. Procédé de marquage d'objets métalliques par ablation laser impliquant l'enlèvement de matériau d'un objet métallique (9) par un système laser à impulsions ultracourtes de telle sorte qu'un faisceau de pulsations laser picosecondes ou femtosecondes soit dirigé sur l'objet métallique (9),
où la durée temporelle (Tp) des impulsions laser est Tp = <150 fs-14 ps> à une taille de point de <5-70 µm> et la fluence des impulsions laser est F = <0,8-20> × F_th ; où F_th = <0,03-0,5> J/cm² et le système laser à impulsions ultracourtes crée au moins une zone (1) avec des LIPSS sur l'objet métallique (9),
dans laquelle la surface de l'objet métallique (9) est d'abord recouverte d'un film multicouche (2) comprenant au moins une couche inférieure (3) et une couche supérieure (4), où la couche supérieure (4) présente une absorbance du faisceau laser plus élevée que la couche inférieure (3) et de ce fait est éliminée plus facilement que la couche inférieure, empêchant que la couche inférieure soit enlevée accidentellement, **caractérisé en ce que**
les impulsions laser sont utilisées pour enlever la couche supérieure (4) et, simultanément, pour structurer la surface de la couche inférieure (3) par les LIPSS.

2. Procédé selon la revendication 1, **caractérisé en ce que** le LIPSS est créé par un faisceau laser polarisé linéairement ou polarisé circulairement.

3. Procédé selon la revendication 1 ou 2, **caractérisé en ce que** au moins deux zones (1) avec les LIPSS sont créées, où la structure et/ou l'orientation relative des LIPSS diffèrent entre au moins deux zones (1).

4. Procédé selon l'une quelconque des revendications précédentes, **caractérisé en ce que** le système laser à impulsions ultracourtes est utilisé pour créer un contour (5) le long d'au moins une zone (1) avec la couche supérieure (4) intacte.

5. Procédé selon l'une quelconque des revendications précédentes, **caractérisé en ce que** la couche inférieure (3) est créée par dépôt séquentiel de couches individuelles dans l'ordre suivant: Cr, suivi de CrN et de CrWC.

6. Procédé selon l'une quelconque des revendications précédentes, **caractérisé en ce que** la couche supérieure (4) est obtenue par dépôt d'une couche de type DLC a-C:H ou a-C:H:Me où Me est un atome métallique quelconque.

7. Procédé selon la revendication 5 ou 6, **caractérisé en ce que** la couche inférieure (3) et/ou la couche supérieure (4) sont conçues pour avoir une épaisseur moyenne de 1,5 µm, avec une déviation ne dépassant pas 50 %.

8. Objet métallique muni du marquage obtenu selon l'une quelconque des revendications précédentes, dont la surface est recouverte d'un film multicouche (2) comprenant au moins une couche inférieure (3) et une couche supérieure (4), où la couche supérieure (4) présente une absorbance du faisceau laser plus élevée que la couche inférieure (3), **caractérisé en ce que**
le film multicouche (2) comprend au moins une zone (1) où il n'y a pas de couche supérieure (4) et où la surface de la couche inférieure (3) est structurée par les LIPSS.

9. Objet métallique selon la revendication 8, **caractérisé en ce que** le film multicouche (2) comprend au moins deux zones (1) avec les LIPSS, où la structure et/ou l'orientation relative des LIPSS diffèrent entre au moins deux zones (1).

10. Objet métallique selon la revendication 8 ou 9, **caractérisé en ce que** le film multicouche (2) comprend au moins une zone (1) avec la couche supérieure (4) intacte et un contour (5).

11. Objet métallique selon l'une quelconque des revendications 8 à 10, **caractérisé en ce que** la portion inférieure de la couche inférieure (3) est formée de Cr, la portion intermédiaire superposée de la couche inférieure (3) est formée de CrN et la portion supérieure superposée de la couche inférieure (3) est formée de CrWC.

12. Objet métallique selon l'une quelconque des revendications 8 à 11, **caractérisé en ce que** la couche supérieure (4) est une couche de type DLC a-C:H ou a-C:H:Me où Me est un atome métallique quelconque.

13. Objet métallique selon la revendication 11 ou 12, **caractérisé en ce que** la couche inférieure (3) et/ou la couche supérieure (4) ont une épaisseur moyenne de 1,5 µm, avec une déviation ne dépassant pas 50 %.

14. Procédé pour identifier des objets enregistrés en utilisant un marquage produit selon la méthode de l'une quelconque des revendications 1 à 7.
